# NEUE EUROPÄISCHE PATENTSCHRIFT

(11) **EP 1 389 272 B2**
(45) Veröffentlichungstag und Bekanntmachung des Hinweises auf die Entscheidung über den Einspruch: **16.06.2010**
(45) Hinweis auf die Patenterteilung: 20.12.2006
(21) Anmeldenummer: 02737840.5
(22) Anmeldetag: 17.05.2002
(51) Int. Cl.: F02M 25/07

(54) **EINRICHTUNG ZUR VERMEIDUNG DES FESTSITZENS EINES ABGASRÜCKFÜHRVENTILS NACH DEM ABSTELLEN DER BRENNKRAFTMASCHINE**
DEVICE FOR PREVENTING AN EXHAUST GAS RECIRCULATION VALVE FROM STICKING AFTER SWITCHING OFF AN INTERNAL COMBUSTION ENGINE
DISPOSITIF SERVANT A EVITER LE BLOCAGE D'UNE SOUPAPE DE REMISE EN CIRCULATION DE GAZ D'ECHAPPEMENT APRES EXTINCTION DU MOTEUR A COMBUSTION INTERNE

(30) Priorität: 23.05.2001 DE 10125094
(43) Veröffentlichungstag der Anmeldung: 18.02.2004
(73) Patentinhaber: Continental Automotive GmbH, 30165 Hannover (DE)
(72) Erfinder: BELLON, Torsten, 61250 Usingen (DE)
(86) Internationale Anmeldenummer: PCT/DE2002/001779
(87) Internationale Veröffentlichungsnummer: WO 2002/095209

(56) Entgegenhaltungen:
- EP-A- 1 028 249
- EP-A- 1 065 365
- EP-A- 1 091 112
- EP-A- 1 201 907
- DE-A- 19 549 107
- DE-A- 19 801 383
- DE-A- 19 825 583
- DE-A1- 19 607 810
- DE-A1- 19 634 913

## Beschreibung

Die Erfindung betrifft eine Einrichtung zur Vermeidung des Festsitzens eines Abgäsrückführventils für einen Verbrennungsmotor, insbesondere für ein Kraftfahrzeug, mit einer vön einer Abgasleitung abzweigenden und in eine Frischgasleitung mündenden Rückführleitung zum Rückführen von Abgas, wobei die Rückführleitung ein Ventil mit einem Absperrorgan aufweist und das Absperrorgan über einen Stellantrieb zwischen einer Schließstellung und einer Offenstellung bewegbar ist und wobei bei einem Stillstand des Verbrennungsmotors das Absperrorgan des Ventils über den Elektromotor in einer Ruhestellung positioniert ist.

Bei einem Verbrennungsmotor wird ein Kraftstoff-Luft-Gemisch dem Verbrennungsmotor zugeführt, dort verbrannt und anschließend als Abgas wieder aus dem Verbrennungsmotor herausgeführt. Das aus dem Verbrennungsmotor herausgeführte Abgas wird üblicherweise in die Umgebung abgeführt, kann aber auch teilweise wieder dem Verbrennungsmotor zugeführt werden. Eine Rückführung des Abgases erneut in den Verbrennungsmotor erfolgt mittels einer Abgasrückführeinrichtung. Mittels einer Abgasrückführeinrichtung wird ein Teil des Abgases aus der Abgasleitung entnommen, der Frischgasleitung wieder beigemischt und zum Verbrennungsmotor zurückgeführt.

Bedingt durch die Abgasrückführung erhalten die Zylinder des Verbrennungsmotors bei gleichem Gasvolumen weniger frisches Kraftstoff-Luft-Gemisch als es ohne eine Beimischung des Abgases zum Kraftstoff-Luft-Gemisch der Fall wäre. Eine Beimischung von Abgas zum Kraftstoff-Luft-Gemisch führt zu einer Herabsetzung der Verbrennungstemperatur in den Zylindern des Verbrennungsmotors weil das zurückgeführte Abgas an der Verbrennung nicht mehr aktiv teilnimmt. Bei einer niedrigen Verbrennungstemperatur im Vergleich zu einer hohen Verbrennungstemperatur entstehen weniger Stickoxide und der Anteil an unverbrannten Kohlenwasserstoff-Verbindungen oder CH-Verbindungen steigt an. Der Anteil an unverbrannten Kohlenwasserstoff-Verbindungen und der ggf. zunehmende Kraftstoffverbrauch bestimmen die obere Grenze der Abgasrückführungsrate. Die Abgasrückführungsrate kann beispielsweise bei direkteinspritzenden Dieselmotoren im Leerlauf bis zu 50 % betragen. Bei einer besonderes hohen Abgasrückführung kann sich zudem auch die Laufruhe des Verbrennungsmotors verschlechtern.

In den Betriebsbereichen des Verbrennungsmotors, in denen der Verbrennungsmotor mit einem besonders fetten Kraftstoff-Luft-Gemisch betrieben werden soll, wird die Abgasrückführeinrichtung abgeschaltet, z.B. Vollast. Ein fettes Kraftstoff-Luft-Gemisch bedeutet hierbei, daß deutlich weniger Luft tatsächlich angesaugt wird als theoretisch für eine vollständige Verbrennung erforderlich ist. Entsprechend wird auch mit einem mageren Gemisch ein Luftüberschuß bezeichnet.

Die Abgasrückführung erfolgt üblicherweise über eine Abgasrückführleitung, die die Abgasleitung mit der Frischgasleitung verbindet. Die Abgasrückführleitung kann dabei unmittelbar nach dem Motor und vor dem Auspuff von der Abgasleitung abzweigen. Für eine variable Rate der Abgasrückführung ist in die Abgasrückführleitung häufig ein Ventil eingebaut. Das Absperrorgan des Ventils ist dabei üblicherweise in Abhängigkeit von verschiedenen Parametern wie beispielsweise Motordrehzahl und Motortemperatur von einer Steuereinheit ansteuerbar.

Bei einem Betrieb des Verbrennungsmotors und der Abgasrückführeinrichtung verschmutzt unter anderem die Abgasrückführleitung sowie der Ventilsitz und das Absperrorgan des Ventils aufgrund von Verunreinigungen des Abgases. Diese Verunreinigungen bilden beim Betrieb des Verbrennungsmotors einen annähernd flüssigen Film an den Wänden der Abgasrückführleitung, an dem Ventilsitz und an dem Absperrorgan des Ventils. Bei einem Abstellen des Verbrennungsmotors erfolgt eine Ablagerung von erkaltenden oder erkalteten Verunreinigungen des Abgases an den Wänden der Abgasrückführleitung, an dem Ventilsitz und an dem Absperrorgan des Ventils.

Aufgrund der Schichten bildenden Verunreinigungen an der Abgasrückführleitung, am Ventilsitz und an dem Absperrorgan des Ventils kann bei abgestelltem Verbrennungsmotor das Absperrorgan des Ventils am Ventilsitz oder an der Abgasrückführleitung festkleben. Denn das Absperrorgan des Ventils wird üblicherweise beim Abstellen des Verbrennungsmotors in seine Schließstellung bewegt. Ein Verkleben des Absperrorgans des Ventils an seinem Ventilsitz oder an der Abgasrückführleitung aufgrund von abgelagerten Verunreinigungen des Abgases kann dazu führen, daß das Ventil bei einem erneuten Betrieb des Verbrennungsmotors nicht mehr durch die hierfür vorgesehenen Mittel, beispielsweise einen Elektromotor zu öffnen ist. Mit einem am Ventilsitz festgeklebten Absperrorgan des Ventils ist kein Betrieb der Abgasrückführeinrichtung mehr möglich. Erst ein Säubern des Absperrorgans des Ventils sowie des Ventilsitzes und der Abgasrückführleitung ermöglichen eine erneute Inbetriebnahme der Abgasrückführeinrichtung.

Aus der DE-A-198 25 583 ist eine Abgasrückführeinrichtung der eingangs genannten Art bekannt, bei der das Absperrorgan durch eine Feder in seiner Ruhestellung positioniert ist.

Aus der DE-A-198 01 383 ist ebenfalls eine Abgasrückführeinrichtung der eingangs genannten Art bekannt, bei der beim Ausschalten der Zündung eine Motorsteuerung den Antrieb des Absperrorgans so ansteuert, daß das Absperrorgan in seine Öffnungsstellung gefahren und dort blockiert wird.

Der Erfindung liegt die Aufgabe zugrunde, eine Einrichtung der oben genannten Art für einen Verbrennungsmotor anzugeben, bei der mit einem besonders geringen Herstellungsaufwand besonders zuverlässig ein Festkleben des Absperrorgans des Ventils am Ventilsitz oder an der Abgasrückführleitung verhindert ist.

Diese Aufgabe wird erfindungsgemäß dadurch gelöst, daß das Absperrorgan des Ventils über ein Getriebe von dem Stellantrieb ansteuerbar ist, wobei mittels des Getriebes ein Drehbewegung des Stellantriebs in eine Linearbewegung des Absperrorgans des Ventils umsetzbar ist und daß das Getriebe einen ersten Bewegungsbereich und einen zweiten Bewegungsbereich auf, wobei der erste Bewegungsbereich durch die Offenstellung und die Schließstellung des Absperrorgans des Ventils begrenzt ist und der zweite Bewegungsbereich durch die Schließstellung und die Ruhestellung des Absperrorgans des Ventils begrenzt ist.

Die Erfindung geht von der Überlegung aus, daß eine mit besonders geringem Herstellungsaufwand zu erstellende Abgasrückführungseinrichtung, bei der gleichzeitig ein Festkleben des Absperrorgans des Ventils am Ventilsitz oder an der Abgasrückführungsleitung besonders zuverlässig verhindert ist, eine besonders geringe Anzahl von Bauteilen aufweisen sollte. Daher sollte eine möglichst geringe Anzahl an zusätzlichen Elementen erforderlich sein, um ein Festkleben des Absperrorgans des Ventils am Ventilsitz oder an der Abgasrückführungsleitung auch bei einem Stillstand des Verbrennungsmotors zuverlässig zu verhindern. Über den sogenannten Steuergerätenachlauf ist daher auch nach einem Abstellen des Verbrennungsmotor eine Bewegung des Absperrorgans des Ventils mittels eines Stellantriebs möglich. Das zeitverzögerte Abschalten der Steuerelektronik nach dem Ausschalten der Zündung für den Verbrennungsmotor ermöglicht das Verstellen des Absperrorgans des Ventils bei Stillstand des Verbrennungsmotors in eine sogenannte Ruhestellung, bei der das Ventil zumindest teilweise geöffnet ist. Die Ruhestellung ist dabei verschieden mit der Schließstellung und der Offenstellung des Absperrorgans des Ventils. Sie befindet sich zwischen den Zuständen vollständig geschlossen und vollständig geöffnet des Absperrorgans des Ventils.

Durch den Einsatz eines Getriebes ist als Stellantrieb ein Standardelektromotor einsetzbar, wodurch der Kostenaufwand für die Abgasrückführeinrichtung ein besonders geringes Maß aufweist. Zudem ist mittels des Getriebes die Bewegung des Absperrorgans des Ventils und damit der Bereich zwischen Offenstellung und Schließstellung des Absperrorgans des Ventils besonders fein einstellbar.

Durch die Festlegung einer Ruhestellung für das Absperrorgans des Ventils, die außerhalb des gewöhnlichen Bewegungsbereichs des Absperrorgans des Ventils liegt, kann diese Ruhestellung in Abhängigkeit vom Fahrzeugtyp, Größe des Motors sowie Verunreinigungen des eingesetzten Kraftstoffs individuell ausgelegt werden.

Vorteilhafterweise ist die Ruhestellung des Absperrorgans des Ventils durch einen Anschlag für das Getriebe vorgegeben. Ein Anschlag kann auch beispielsweise bei Wartungsarbeiten des Kraftfahrzeugs und des Verbrennungsmotors nachträglich justiert werden, womit die Abgasrückführeinrichtung besonders einfach an Verschleiß und geänderte Betriebsbedingungen anpassbar ist. Hierbei erweist es sich insbesondere als vorteilhaft, wenn der Anschlag an sich verstellbar ist.

Vorteilhafterweise weist das Getriebe zum Rückstellen des Absperrorgans sowohl in Ruhestellung als auch in Schließstellung eine Rückstellfeder auf. Eine Rückstellfeder, die beim Öffnen des Absperrorgans des Ventils gespannt wird und bei geöffnetem Ventil das Absperrorgan gegen die Kraft des Stellantriebs in die Schließstellung oder die Ruhestellung zurückdrängt kann bei einem Ausfall des Stellantriebs das Absperrorgan des Ventils in Schließstellung bewegen. Voraussetzung hierfür ist, das der Stellantrieb von der Kraft der Rückstellfeder bewegbar ist. Durch die Rückstellfeder ist besonders zuverlässig gewährleistet, daß bei einem Ausfall des Stellantriebs das Absperrorgan des Ventils in Schließstellung bewegt wird oder in Ruhestellung fixiert wird. Mit einem defekten Stellantrieb ist der Verbrennungsmotor zwar ohne Abgasrückführeinrichtung jedoch ansonsten ordnungsgemäß einsetzbar.

Vorteilhafterweise ist die aktuelle Position des Absperrorgans des Ventils von einem an einer Steuereinrichtung angeschlossenen Sensor erfaßbar. Hierdurch ist bei allen Betriebszuständen der Abgasrückführeinrichtung kontrollierbar, wo das Absperrorgan des Ventils aktuell positioniert ist. Hierdurch kann eine besonders feine Abstimmung der jeweils aktuellen Position des Absperrorgans mit anderen Parametern des Verbrennungsmotors erfolgen.

Vorteilhafterweise ist das Ventil ein Tellerventil. Ein Tellerventil weist ein annähernd tellerförmiges Absperrorgan mit einem Halteelement auf. Eine entsprechende Aussparung in einer Rohrwand ist besonders zuverlässig von einem Tellerventil abdeckbar. Für eine vollständige Abdeckung der Rohrwand durch das Tellerventil können Abdichtungselemente zwischen der Rohrwand und dem annähernd tellerförmigen Absperrorgan vorhanden sein. Das annähernd tellerförmige Absperrorgan kann sich dabei zum Öffnen entweder in das Rohr hinein oder aber auch aus dem Rohr heraus zum Öffnen bewegen.

Vorteilhafterweise ist die dem Verbrennungsmotor zuzuführende Frischgasmenge über einen ansteuerbaren Klappenmechanismus einstellbar, wobei das Ventil stromab unmittelbar nach dem ansteuerbaren Klappenmechanismus in die Frischgasleitung mündet. Hierdurch ist eine besonders vollständige Vermischung des in die Frischgasleitung geführten Abgases mit der Frischgas zuverlässig gewährleistet.

Vorteilhafterweise ist der Klappenmechanismus eine Drosselklappe. Mittels einer Drosselklappe ist in besonders einfacher Weise die Zufuhrmenge eines gasförmigen Mediums steuerbar.

Vorteilhafterweise ist der Verbrennungsmotor ein direkteinspritzender Ottomotor oder ein direkteinspritzender Dieselmotor. Systeme für direkteinspritzende Motoren, also Otto- und Dieselmotoren, sind Hochratensysteme mit starker Versottungsneigung. Das entstehende Kondensat begünstigt das Verkleben des Ventils im Sitz nach Abstellen des Verbrennungsmotors. Mit der oben beschriebenen Abgasrückführeinrichtung weist die Gefahr des Festklebens des Ventils an seinem Sitz ein besonders geringes Maß auf.

Die mit der Erfindung erzielten Vorteile bestehen insbesondere darin, daß für das Absperrorgan innerhalb oder außerhalb des Bewegungsbereichs eine fest vorgebbare Ruhestellung vorgegeben ist. Durch die Ausnutzung des Steuergerätenachlaufs nach Abstellen des Verbrennungsmotors kann das Absperrorgan in die Ruhestellung bewegt werden. Es ist also kein zusätzlicher technischer Aufwand des Verbrennungsmotors für ein Bewegen des Absperrorgans des Ventils in Ruhestellung erforderlich. Ein Festkleben oder ein Festhaften des Absperrorgans des Ventils an seinem Ventilsitz oder an der Abgasrückführleitung ist durch die Bewegung des Absperrorgans des Ventils in Ruhestellung beim Abstellen des Verbrennungsmotors besonders zuverlässig verhindert. Hierdurch weist die Abgasrückführeinrichtung ein besonders geringes Maß an Wartung und zugleich eine besonders lange Lebensdauer auf.

Ein Ausführungsbeispiel wird anhand einer Zeichnung näher erläutert. Darin zeigen die Figuren:
- Figur 1: Schematisch einen Verbrennungsmotor mit einer Abgasrückführeinrichtung,
- Figur 2: schematisch den Absperrmechanismus gemäß Figur 1 im geschlossenen Zustand,
- Figur 3: den Absperrmechanismus gemäß Figur 1 im Zustand maximaler Öffnung,
- Figur 4: den Absperrmechanismus im Zustand der Offenstellung gemäß Figur 1 und
- Figur 5: den Absperrmechanismus in Ruhestellung gemäß Figur 1.

Einander entsprechende Teile sind in allen Figuren mit den gleichen Bezugszeichen versehen.

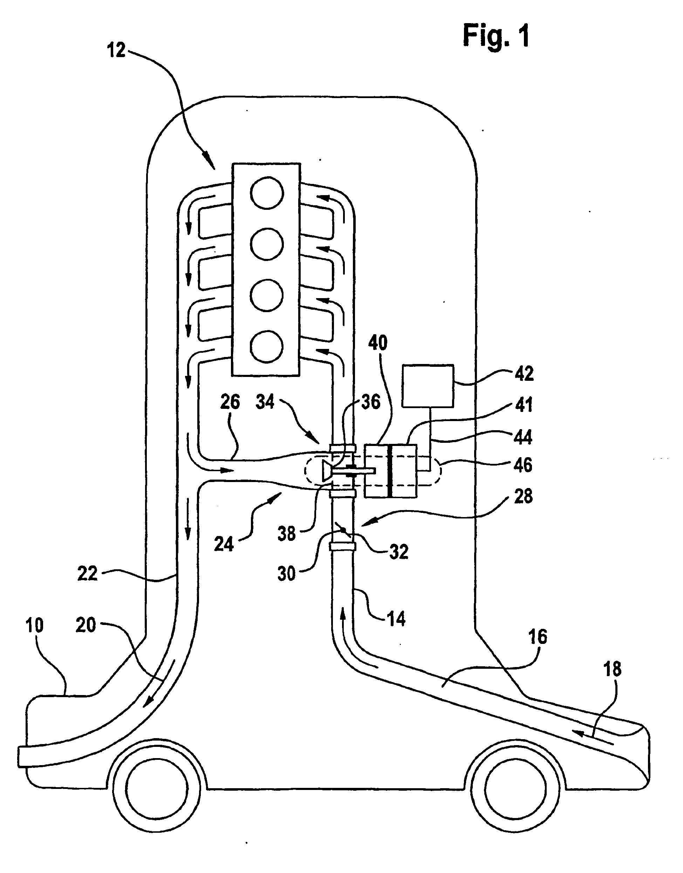

Das Kraftfahrzeug 10 gemäß Figur 1 umfasst einen Verbrennungsmotor 12. Der Verbrennungsmotor 12 umfasst eine Vielzahl von Komponenten wie beispielsweise Einspritzdüsen für Kraftstoff, eine Kraftstoffpumpe, Kolben, Zylinder, was in der Zeichnung nicht näher dargestellt ist. In den Verbrennungsmotor 12 mündet eine Frischgasleitung 14 mit einem Rohrinnenraum 16, das eingangseitig an die Umgebung des Kraftfahrzeugs 10 angeschlossen ist. Über den Rohrinnenraum 16 der Frischgasleitung 14 wird dem Verbrennungsmotor 12 Frischgas 18 zur Verbrennung von Kraftstoff zugeführt. Bei dem Kraftstoff kann es sich um Diesel oder Benzin handeln. In diesem Ausführungsbeispiel ist ein für Diesel vorgesehener Verbrennungsmotor 12 dargestellt. Im Verbrennungsmotor 12 wird Frischgas 18 in nicht näher dargestellter Weise mit Kraftstoff vermischt und verbrannt.

Das bei der Verbrennung entstehende Abgas 20 wird über eine Abgasleitung 22 in die Umgebung des Kraftfahrzeugs 10 abgeführt. Zur Rückführung von Abgas 20 in den Verbrennungsmotor 12 des Kraftfahrzeugs 10 weist das Kraftfahrzeug 10 eine Abgasrückführeinrichtung 24 auf. Die Abgasrückführeinrichtung 24 umfasst eine Abgasrückführleitung 26, die von der Abgasleitung 22 abzweigt und in die Frischgasleitung 14 mündet. Die Mündung der Abgasrückführleitung 26 in die Frischgasleitung 14 ist dabei unmittelbar nach einem Klappenmechanismus 28 vorgesehen. Über den Klappenmechanismus 28 ist die dem Verbrennungsmotor 12 zuführbare Menge an Frischgas 18 einstellbar. Hierzu weist der Klappenmechanismus 28 eine auf einer Welle 30 drehbar angeordnete Drosselklappe 32 auf.

Die Abgasrückführeinrichtung 24 umfasst weiterhin ein Ventil 34 mit einem Absperrorgan 36. Weitere Elemente des Ventils 34 wie beispielsweise Gehäuse, Dichtungen und Flansche zum Festschrauben sind in der Zeichnung nicht näher dargestellt. Das Absperrorgan 36 ist im Rohrinnenraum 16 der Frischgasleitung 14 angeordnet. Das Ventil 34 verschließt mit seinem Absperrorgan 36 vom Innenraum 16 der Frischgasleitung 14 her einen als Randbereich einer Aussparung in der Rohrwand der Frischgasleitung 14 ausgebildeten Ventilsitz 38. Alternativ kann jedoch auch der als Randbereich der Aussparung in der Rohrwand der Frischgasleitung 14 ausgebildete Ventilsitz 38 von außen her von dem Absperrorgan 36 des Ventils 34 verschließbar sein.

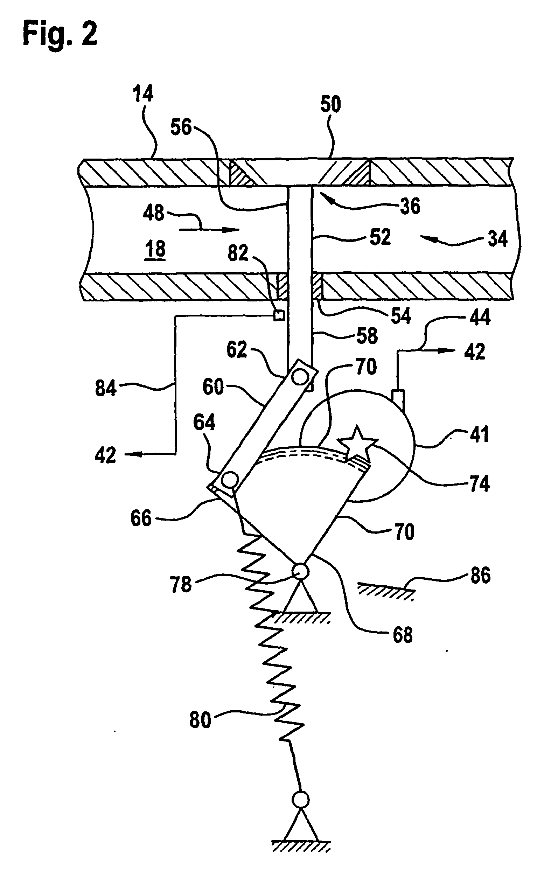

Die Abgasrückführeinrichtung 24 umfaßt außerdem ein Getriebe 40, an das das Absperrorgan 36 des Ventils 34 angeschlossen ist. Das Getriebe 40 ist über einen als Elektromotor ausgebildeten Stellantrieb 41 von einer Steuereinheit 42 über eine Steuerleitung 44 ansteuerbar. Den mit einer gestrichelten Linie gekennzeichneten annähernd ovalförmigen Ausschnitt 46 gemäß Figur 1 zeigen die Figuren 2 bis 5. Die Figuren 2 bis 5 zeigen jeweils unterschiedliche Positionen des Absperrorgans 36 des Ventils 34.

Figur 2 zeigt den Abschnitt der Frischgasleitung 14 mit seinem Rohrinnenraum 16, in dem das Ventil 34 angeordnet ist. Die Frischgasleitung 14 wird von Frischgas 18 gemäß der Richtung des Pfeiles 48 durchströmt. Das Absperrorgan 36 des Ventils 34 umfaßt ein annähernd tellerförmiges Verschlußelement 50 und ein an dem annähernd tellerförmigen Verschlußelement 50 angeordnetes Halteelement 52. Das annähernd tellerförmige Verschlußelement 50 verschließt den Ventilsitz 38. Das Halteelement 52 ist an seinem ersten Ende 56 starr mit dem annähernd tellerförmigen Verschlußelement 50 verbunden. Alternativ kann das Halteelement mit seinem ersten Ende 56 auch flexibel, beispielsweise über eine Feder, mit dem annähernd tellerförmigen Verschlußelement 50 verbunden sein. Mit seinem zweiten Ende 58 ist das Halteelement 52 auf der dem Ventilsitz 38 gegenüberliegenden Seite der Rohrwand der Frischgasleitung 14 durch die Rohrwand der Frischgasleitung 14 mit einer Dichtung 54 hindurchgeführt. Das Ventil 34 umfasst noch weitere Elemente, wie beispielsweise ein Gehäuse, Dichtungen und Verbindungsflansche, die in der Zeichnung nicht näher dargestellt sind.

Das Halteelement 52 des Absperrorgans 36 des Ventils 34 ist mit dem Getriebe 40 verbunden. Hierzu umfaßt das Getriebe 40 einen Schwenkarm 60, der mit seinem ersten Ende 62 drehbar mit dem zweiten Ende 58 des Halteelements 52 verbunden ist. Der Schwenkarm 60 und das Halteelement 52 des Absperrorgans 36 sind um den Verbindungspunkt herum drehbar. Das zweite Ende 64 des Schwenkarms 60 wiederum ist drehbar mit einem ersten Eckbereich 66 eines annähernd dreieckförmigen Zahnsegments 68 verbunden, wobei sowohl das Zahnsegment 68 als auch der Schwenkarm 60 um den Verbindungspunkt herum drehbar sind.

Das Zahnsegment 68 des Getriebes 40 ist an einer seiner drei Seiten 70 von dem als Elektromotor ausgebildeten Stellantrieb 41 beaufschlagbar. Der als Elektromotor ausgebildete Stellantrieb 41 weist hierzu ein antreibbares Zahnrad 74 auf, das in eine entsprechende Verzahnung des Zahnsegments 68 greift. Die Verzahnung des Zahnsegments 68 ist dabei an einer der Seiten 70 des annähernd dreieckförmigen Zahnsegments 68 angeordnet, wobei die die Verzahnung aufweisende Seite 70 annähernd kreisbogenförmig ausgebildet ist, damit die Verzahnung bei einer Rotation des Zahnsegments 68 in das Zahnrad 74 des als Elektromotor ausgebildeten Stellantriebs 41 greifen kann. Das Zahnsegment 68 ist in einem zweiten Eckbereich 76 an einem Fixpunkt 78 schwenkbar fixiert.

Der Schwenkarm 60 ist an seinem zweiten Endbereich 64 nicht nur mit dem annähernd dreieckförmigen Zahnsegment 68 sondern zusätzlich auch noch mit einer Rückstellfeder 80 verbunden. Die Rückstellfeder 80 ist so ausgelegt, dass sie den Schwenkarm 60 stets in die Position gemäß Figur 2 zurückdrängt, die der Schließstellung des Ventils 34 entspricht.

An das Absperrorgan 36 des Ventils 34 ist ein Sensor 82 angeschlossen, der über eine Sensorleitung 84 mit der Steuereinheit 42 gemäß Figur 1 verbunden ist. Der Sensor 82 erfasst beim Betrieb des Ventils 34 die aktuelle Position des Absperrorgans 36. In Abhängigkeit von der jeweils aktuellen Position des Absperrorgans 36 des Ventils 34 steuert die Steuereinheit 42 über die Steuerleitung 44 den als Elektromotor ausgebildeten Stellantrieb 41 in der Weise an, dass die Sollposition des Absperrorgans 36 des Ventils 34 stets der Istposition entspricht.

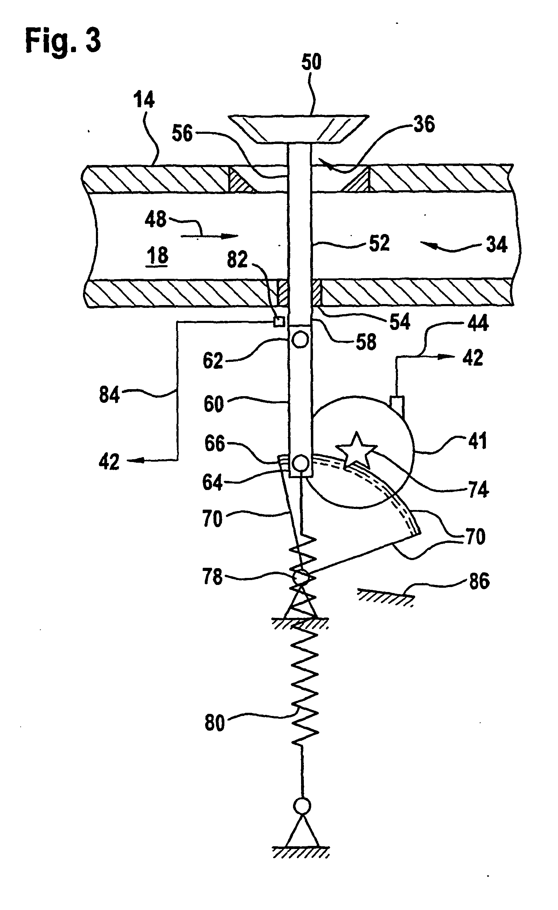

Figur 3 zeigt das Ventil 34 in der sogenannten Offenstellung. Das Zahnsegment 68 ist aus der Position gemäß Figur 2 in die Position gemäß Figur 3 durch das Zahnrad 74 des als Elektromotor ausgebildeten Stellantriebs 41 bewegt worden. Die Rückstellfeder 80 befindet sich in einem Zustand maximaler Spannung. Die Rückstellkraft der Rückstellfeder 80 wird durch die Bestromung des als Elektromotor ausgebildten Stellantriebs 41 gehemmt.

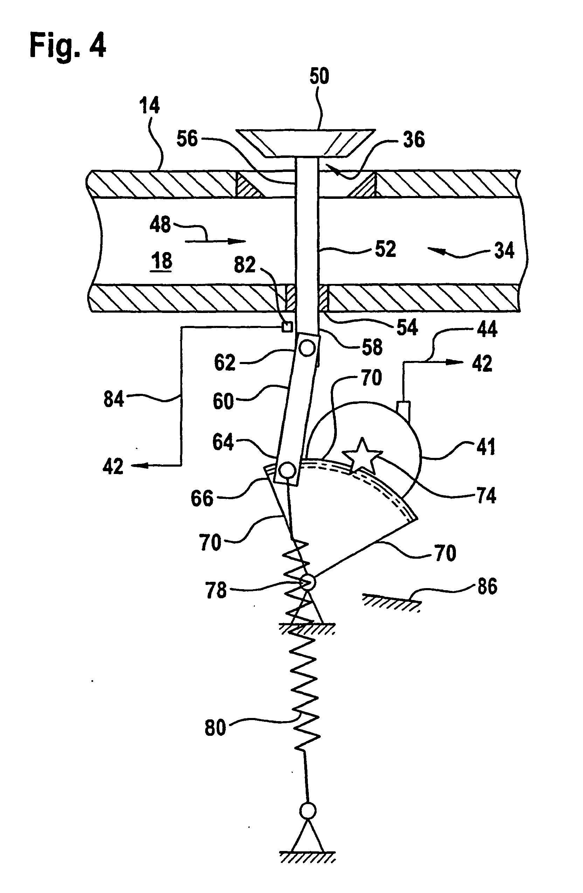

Figur 4 zeigt das Absperrorgan 36 des Ventils 34 in einer zweiten Offenstellung, die der maximalen Offenstellung im Regelbereich des Ventils 28 entspricht.

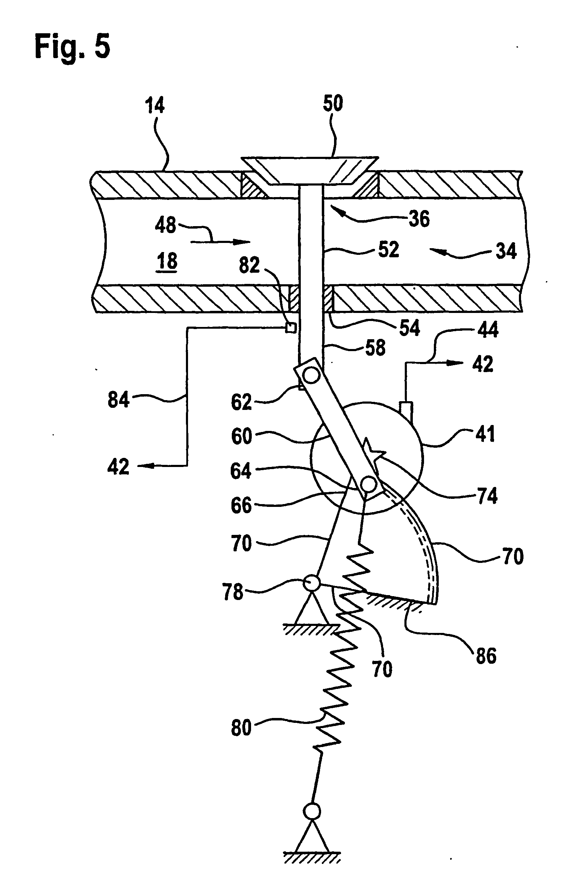

Figur 5 zeigt schließlich das Ventil 34 in der Ruhestellung. Das Zahnsegment 68 liegt mit seiner einen Seite 70 an einem Anschlag 86 an. Das Absperrorgan 36 des Ventils 34 ist über eine den Schwenkarm 60 antreibende Bewegung des Stellantriebs 41 in diese Position gebracht worden. Die Rückstellfeder 80 fixiert das Absperrorgan 36 dabei in seiner Ruhestellung. Der Anschlag 86 kann seine aktuelle Position verändern, was in der Zeichnung nicht näher dargestellt ist.

Beim Betrieb des Kraftfahrzeugs 10 wird dem Verbrennungsmotor 12 Frischgas 18 über die Frischgasleitung 14 zugeführt. Im Verbrennungsmotor 12 erfolgt eine Verbrennung von Kraftstoff unter Zumischung von Frischgas 18, was in der Zeichnung nicht näher dargestellt ist. Das Abgas 20 wird über die Abgasleitung 22 aus dem Verbrennungsmotor 12 hinausgeführt.

Beim Betrieb des Kraftfahrzeugs 10 wird auch die Abgasrückführeinrichtung 24 betrieben. Hierzu wird Abgas 20 aus der Abgasleitung 22 in die Abgasrückführleitung 26 eingespeist. Dies erfolgt ohne zusätzliche Hilfsmittel durch eine Abzweigung der Abgasrückführleitung 26 von der Abgasleitung 22. Alternativ kann jedoch auch aktiv eine Entnahme von Abgas 20 aus der Abgasleitung 22 zur Einspeisung in die Abgasrückführleitung 26 vorgesehen sein.

Die Menge an Abgas 20 die dem Frischgas 18 beigemischt wird, wird über die Steuereinheit 36 mittels einer Bewegung des Absperrorgans 36 gesteuert. Hierzu ist die Steuereinheit 42 in nicht näher dargestellter Weise mit weiteren Komponenten des Verbrennungsmotors 12, die ebenfalls nicht näher dargestellt sind, verbunden. In Abhängigkeit von Parametern, die die Steuereinheit 42 von weiteren Elementen des Verbrennungsmotors 12 erhält, steuert die Steuereinheit 36 die dem Frischgas 18 beizumischende Menge an Abgas 20 mittels einer Bewegung des Absperrorgans 36. Der erste Bewegungsbereich des Getriebes 40 liegt dabei zwischen der Schließstellung gemäß Figur 2 und der Offenstellung gemäß Figur 4. Die Stellung des Absperrorgans 36 des Ventils 34 bestimmt dabei, wieviel Abgas 20 in das Frischgas 18 der Frischgasleitung 14 eingespeist wird.

Bei einem Stillstand des Kraftfahrzeugs 10 bilden die erkaltenden und kalten Verunreinigungen des Abgases 20 einen Film im Strömungsbereich des Kraftstoff-Luft-Gemischs, wodurch die Gefahr besteht, daß das Absperrorgan 36 an dem Ventilsitz 38 durch den sich erkaltenden Film festklebt. Um nun nach einem Betrieb des Kraftfahrzeugs 10 bei einem Stillstand des Verbrennungsmotors 12 ein Verkleben des Absperrorgans 36 an dem Ventilsitz 38 zuverlässig zu verhindern, wird das Absperrorgan 36 des Ventils 34 nach einem Abstellen des Verbrennungsmotors 12 mittels des als Elektromotor ausgebildeten Stellantriebs 41 und des Getriebes 40 in die Ruhestellung gemäß Figur 5 verfahren. Die Ruhestellung des Absperrorgans 36 des Ventils 34 ist dabei definiert durch den Anschlag 86. Eine Bewegung des Absperrorgans 36 des Ventils 34 in seine Ruhestellung erfolgt über Strom, der nach einem Abstellen des Verbrennungsmotors 12 noch zur Verfügung steht. Diese Phase wird auch als Steuergerätenachlauf bezeichnet. Dieser zweite Bewegungsbereich des Getriebes 40 liegt also zwischen der Schließstellung gemäß Figur 2 und der Ruhestellung gemäß Figur 5. Durch die Anordnung des Absperrorgans 36 des Ventils 34 in Ruhstellung statt in Schließstellung ist zuverlässig ein Verkleben des Absperrorgans 36 am Ventilsitz 38 der Frischgasleitung 14 verhindert.

Bei einer Wiederinbetriebnahme des Verbrennungsmotors 12 des Kraftfahrzeugs 10 erfolgt mittels der Steuereinheit 42 eine Bewegung des Absperrorgans 36 des Ventils 34 in Schließstellung gemäß Figur 2. Aus der Schließstellung heraus erfolgt der weitere Betrieb der Abgasrückführeinrichtung 24.

Um nun auch bei einem Ausfall des als Elektromotor ausgebildeten Stellantriebs 41 einen ordnungsgemäßen Betrieb des Verbrennungsmotors 12 sicherzustellen, ist das Absperrorgan 36 derart ausgelegt, dass es im stromlosen Zustand durch die Rückstellfeder 80 bewegbar ist. Fällt nun beim Betrieb der Abgasrückführeinrichtung 24 der als Elektromotor ausgebildete Stellantrieb 41 aus, so drängt die Rückstellfeder 80 das Zahnsegment 68 von einer Offenstellung im Bewegungsbereich des Getriebes 40 zwischen der Offenstellung gemäß Figur 4 und der Schließstellung gemäß Figur 2 in die Schließstellung gemäß Figur 2 zurück. Ein weiterer Betrieb der Abgasrückführeinrichtung ist ohne einen Betrieb des als Elektromotor ausgebildeten Stellantriebs 41 nicht möglich. Jedoch ist zuverlässig ein Betrieb des Verbrennungsmotors 12 wenn auch ohne den Betrieb der Abgasrückführeinrichtung 24 gewährleistet, wodurch dem Fahrer des Kraftfahrzeugs zumindest eine Fahrt zur nächsten Reparaturwerkstatt ermöglicht ist.

Bei der Abgasrückführeinrichtung 24 ist durch den Bewegungsbereich des Getriebes 40 zwischen der Schließstellung gemäß Figur 2 und der maximalen Offenstellung gemäß Figur 3 ein zuverlässiger Betrieb der Abgasrückführeinrichtung gewährleistet. Auch ist bei einem Stillstand des Verbrennungsmotors 12 ein Verkleben des Absperrorgans 36 am Ventilsitz 38 zuverlässig dadurch verhindert, dass das Absperrorgan 36 des Ventils 34 bei einem Abstellen des Verbrennungsmotors 12 in einen Zustand mit einer geringen Offenstellung bewegt ist. Sollte in dieser Position der als Elektromotor ausgebildete Stellantrieb 41 ausfallen, so wird stets eine konstante Menge Abgas 20 der Frischgas 18 beigemischt. Die Ruhestellung des Absperrorgans 36 des Ventils 34 ist dabei so bemessen, das ein ordnungsgemäßer Betrieb des Verbrennungsmotors 12 gewährleistet ist und gleichzeitig ein Verkleben des Absperrorgans 36 am Ventilsitz 38 verhindert wird.

## Patentansprüche

1. Einrichtung (24) zur Vermeidung des Festsitzens eines Abgasrückführventils nach dem Abstellen der Brennkraftmaschine (12), insbesondere für ein Kraftfahrzeug (10), mit einer von einer Abgasleitung (22) abzweigenden und in eine Frischgasleitung (14) mündenden Abgasrückführleitung (26) zum Rückführen von Abgas (20), wobei die Abgasrückführleitung (26) ein Ventil (34) mit einem Absperrorgan (36) aufweist und das Absperrorgan (36) über einen Stellantrieb (41) zwischen einer Schließstellung und einer Offenstellung bewegbar ist und wobei bei Stillstand des Verbrennungsmotors (12) das Absperrorgan (36) des Ventils (34) über den Stellantrieb (41) in einer Ruhestellung positioniert ist, **dadurch gekennzeichnet, daß** das Absperrorgan (36) des Ventils (34) über ein Getriebe (40) von dem Stellantrieb (41) ansteuerbar ist, wobei mittels des Getriebes (40) eine Drehbewegung des Stellantriebs (41) in eine Linearbewegung des Absperrorgans (36) umsetzbar ist und daß das Getriebe (40) einen ersten Bewegungsbereich und einen zweiten Bewegungsbereich aufweist, wobei der erste Bewegungsbereich durch die Offenstellung und die Schließstellung des Absperrorgans (36) des Ventils (34) begrenzt ist und der zweite Bewegungsbereich durch die Schließstellung und die Ruhestellung des Absperrorgans (36) des Ventils (34) be- , grenzt ist, und dass der zweite Bewegungsbereich des Getriebes (40) größer als der erste Bewegungsbereich des Getriebes (40) ist.

2. Einrichtung (24) nach Anspruch 1, **dadurch gekennzeichnet, daß** die Ruhestellung des Absperrorgans (36) des Ventils (34) durch einen Anschlag (86) für das Getriebe (40) vorgegeben ist.

3. Einrichtung (24) nach Anspruch 2, **dadurch gekennzeichnet, daß** der Anschlag (24) verstellbar ist.

4. Einrichtung (24) nach einem der Ansprüche 1 bis 3, **dadurch gekennzeichnet, daß** das Getriebe (40) zum Rückstellen des Absperrorgans (36) sowohl in Ruhestellung als auch in Schließstellung eine Rückstellfeder (80) aufweist.

5. Einrichtung (24) nach einem der Ansprüche 1 bis 4, **dadurch gekennzeichnet, daß** die aktuelle Position des Absperrorgans (36) des Ventils (34) von einem an eine Steuereinheit (42) angeschlossenen Sensor (82) erfaßbar ist.

6. Einrichtung (24) nach einem der Ansprüche 1 bis 5, **dadurch gekennzeichnet, daß** das Ventil (34) ein Tellerventil ist.

7. Einrichtung (24) nach einem der Ansprüche 1 bis 6, **dadurch gekennzeichnet, daß** die dem Verbrennungsmotor (12) zuzuführende Frischgasmenge (18) über einen ansteuerbaren Klappenmechanismus (28) einstellbar ist, wobei das Ventil (34) stromab unmittelbar nach dem ansteuerbaren Klappenmechanismus (28) in die Frischgasleitung (14) mündet.

8. Einrichtung (24) nach einem der Ansprüche 1 bis 7, **dadurch gekennzeichnet, daß** der Klappenmechanismus (28) eine Drosselklappe (32) umfaßt.

9. Einrichtung (24) nach einem der Ansprüche 1 bis 8, **dadurch gekennzeichnet, daß** der Verbrennungsmotor ein direkteinspritzender Ottomotor oder ein direkteinspritzender Dieselmotor ist.

## Claims

1. Device (24) for preventing an exhaust gas recirculation valve from sticking after switching off the internal combustion engine (12), in particular for a motor vehicle (10), having an exhaust gas recirculation line (26) which branches off from an exhaust line (22) and leads into a fresh gas line (14) and is used for recirculating exhaust gas (20), the exhaust gas recirculation line (26) having a valve (34) with a closing element (36) and the closing element (36) being able to be moved between a closing position and an opening position by means of an actuator (41), and, when the internal combustion engine (12) is not in operation, the closing element (36) of the valve (34) being placed in an idle position by means of the actuator (41), **characterized in that** the closing element (36) of the valve (34) can be activated by the actuator (41) via a gear mechanism (40), it being possible for a rotational movement of the actuator (41) to be converted into a linear movement of the closing element (36) by means of the gear mechanism (40), and **in that** the gear mechanism (40) has a first movement range and a second movement range, the first movement range being limited by the opening position and the closing position of the closing element (36) of the valve (34), and the second movement range being limited by the closing position and the idle position of the closing element (36) of the valve (34), and **in that** the second movement range of the gear mechanism (40) is larger than the first movement range of the gear mechanism (40).

2. Device (24) according to Claim 1, **characterized in that** the idle position of the closing element (36) of the valve (34) is predetermined by a stop (86) for the gear mechanism (40).

3. Device (24) according to Claim 2, **characterized in that** the stop (24) can be adjusted.

4. Device (24) according to one of Claims 1 to 3, **characterized in that** the gear mechanism (40) for resetting the closing element (36) both into the idle position and into the closing position has a resetting spring (80).

5. Device (24) according to one of Claims 1 to 4, **characterized in that** the current position of the closing element (36) of the valve (34) can be detected by a sensor (82) connected to a control unit (42).

6. Device (24) according to one of Claims 1 to 5, **characterized in that** the valve (34) is a disc valve.

7. Device (24) according to one of Claims 1 to 6, **characterized in that** the amount of fresh gas (18) to be supplied to the internal combustion engine (12) can be set via an activatable spring-valve mechanism (28), the valve (34) leading downstream directly after the activatable swing-valve mechanism (28) into the fresh gas line (14).

8. Device (24) according to one of Claims 1 to 7, **characterized in that** the swing-valve mechanism (28) comprises a butterfly valve (32).

9. Device (24) according to one of Claims 1 to 8, **characterized in that** the internal combustion engine is a direct injection spark ignition engine or a direct injection diesel engine.

## Revendications

1. Dispositif (24) destiné à éviter le blocage d'une soupape de réinjection de gaz d'échappement après l'arrêt d'un moteur à combustion interne (12), notamment sur un véhicule automobile (10), comportant une conduite de réinjection de gaz d'échappement (26) destinée à la réinjection de gaz d'échappement (20), ladite conduite de réinjection bifurquant d'une conduite de gaz d'échappement (22) et débouchant dans une conduite de gaz frais (14), où la conduite de réinjection de gaz d'échappement (26) comporte une soupape (34) avec un organe d'obturation (36), où l'organe d'obturation (36) peut être déplacé par un mécanisme de commande (41) entre une position fermée et une position ouverte et où, lors de l'arrêt du moteur à combustion interne (12), l'organe d'obturation (36) de la soupape (34) est amené par le mécanisme de commande (41) dans une position de repos, **caractérisé par le fait que** l'organe d'obturation (36) de la soupape (34) est contrôlé par le mécanisme de commande (41) à travers une transmission (40), un mouvement de rotation du mécanisme de commande (41) étant converti, au moyen de la transmission (40), en un mouvement linéaire de l'organe d'obturation (36), et **par le fait que** la transmission (40) comporte une première plage de mouvement et une deuxième plage de mouvement, la première plage de mouvement étant limitée par la position ouverte et la position fermée de l'organe d'obturation (36) de la soupape (34) et la deuxième plage de mouvement étant limitée par la position fermée et la positon de repos de l'organe d'obturation (36) de la soupape (34), et **par le fait que** la deuxième plage de mouvement de la transmission (40) est plus grande que la première plage de mouvement de la transmission (40).

2. Dispositif (24) selon la revendication 1, **caractérisé par le fait que** la position de repos de l'organe d'obturation (36) de la soupape (34) est donnée par une butée (86) destinée à la transmission (40).

3. Dispositif (24) selon la revendication 2, **caractérisé par le fait que** la butée (24) est réglable.

4. Dispositif (24) selon l'une des revendications 1 à 3, **caractérisé par le fait que** la transmission (40) comporte un ressort de rappel (80) destiné à ramener l'organe d'obturation (36) non seulement en position de repos, mais aussi en position fermée.

5. Dispositif (24) selon l'une des revendications 1 à 4, **caractérisé par le fait que** la position de l'organe d'obturation (36) de la soupape (34) est détectée en temps réel par un capteur (82) raccordé à une unité de commande (42).

6. Dispositif (24) selon l'une des revendications 1 à 5, **caractérisé par le fait que** la soupape (34) est une soupape en champignon.

7. Dispositif (24) selon l'une des revendications 1 à 6, **caractérisé par le fait que** la quantité de gaz frais (18) à envoyer au moteur à combustion interne (12) est réglable par l'intermédiaire d'un mécanisme à clapet (28) contrôlé, la soupape (34) débouchant dans la conduite de gaz frais (14), dans le sens du flux de gaz, directement après le mécanisme à clapet (28) contrôlé.

8. Dispositif (24) selon l'une des revendications 1 à 7, **caractérisé par le fait que** le mécanisme à clapet (28) comporte un papillon d'étranglement (32).

9. Dispositif (24) selon l'une des revendications 1 à 8, **caractérisé par le fait que** le moteur à combustion interne est un moteur à explosion à injection directe ou un moteur diesel à injection directe.
